# EUROPÄISCHE PATENTSCHRIFT

(11) **EP 2 447 041 B1**
(45) Veröffentlichungstag und Bekanntmachung des Hinweises auf die Patenterteilung: **18.03.2015**
(21) Anmeldenummer: 11185661.3
(22) Anmeldetag: 18.10.2011
(51) Int. Cl.: B29C 65/08, B65B 51/22, B65B 51/30, B65B 9/207, B65B 9/213

(54) **Ultraschall-Heißsiegelverfahren mit Siegel-Druckregelung**
Ultrasound heat sealing method with seal pressure regulation
Procédé de scellement à chaud par ultrasons avec réglage de la pression de scellement

(30) Priorität: 02.11.2010 DE 102010050008; 31.03.2011 DE 102011006506
(43) Veröffentlichungstag der Anmeldung: 02.05.2012
(73) Patentinhaber: Rovema GmbH, 35463 Fernwald-Annerod (DE)
(72) Erfinder: Dersch, Volker, 35305 Grünberg (DE); Kuhn, Roland, 35447 Reiskirchen (DE); Lutz, Erhard, 35325 Mücke (DE)
(74) Vertreter: advotec.

(56) Entgegenhaltungen:
- DE-A1-102004 049 376
- JP-A- 2013 063 521
- US-A- 5 826 407
- US-A1- 2007 257 087
- US-A1- 2009 188 966

## Beschreibung

Die vorgeschlagene Neuerung betrifft den Verpackungsmaschinenbau und dort ein Verfahren zum Erzeugen einer Schweißkraft bzw. eines Schweißdruckes beim Foliensiegeln mit Ultraschall, insbesondere in einer Quersiegelstation einer vertikalen Schlauchbeutelmaschine.

Aus der DE 44 25 207 A ist es bekannt, eine Schweißbacke einer Quersiegelstation einer vertikalen Schlauchbeutelmaschine entlang einer geschlossenen Bahn zu bewegen. Dabei weist die Bahn einen geraden Abschnitt auf, welcher zum Anliegen an einem zwischen der Schweißbacke und einer zweiten, gegenläufigen Schweißbacke zusammengedrückten Folienschlauches vorgesehen ist. Dabei werden der Folienschlauch und die Schweißbacken in Richtung des geraden Abschnittes mit gleicher oder unterschiedlicher Geschwindigkeit weiterbewegt, um den Folienschlauch mittels über die Siegelflächen der Schweißbacken in den Folienschlauch eingebrachter Wärme bei einem ausgeübten Druck in einer Siegelebene unter einer Siegelkraft innerhalb einer Siegelzeit zu verschweißen. Dabei ist ein Antrieb dazu vorgesehen, die Schweißbacke in einer Normalrichtung zu einer Oberfläche des Widerstandes hin zu bewegen, um derart den Schweißvorgang ortsfest oder entlang eines effektiven Siegelweges innerhalb der Siegelzeit durchzuführen, und die Siegelkraft kann vorgewählt werden.

Bei einer anderen vertikalen Schlauchbeutelmaschine ist lediglich ein Antrieb dazu vorgesehen, zwei nur in horizontaler Richtung aufeinander zu und voneinander weg bewegbare Schweißbacken entlang jeweils einer linienförmigen Bahn zu bewegen, um einen Folienschlauch jeweils bei einem Folienstillstand quer zu seiner Transportrichtung zu verschweißen.

Die DE 10 2004 049 376 A1 beschreibt ein Siegelverfahren, bei dem die Siegelkraft von einer Steuereinrichtung des Antriebs während der Siegelzeit vorgegeben wird und somit in beliebiger Weise während der gesamten Siegelzeit zeitabhängig vorwählbar ist.

Die bekannten Verfahren und Vorrichtungen haben den Nachteil, dass die Siegelkraftkurve bzw. der sich aus dem Betrag der Siegelfläche und der Siegelkraft ergebende Siegeldruckkurve stets nur ein relatives Maximum aufweist.

Bei dem in der DE 10 2004 049 376 A1 beschriebenen Verfahren durchläuft die Siegelkraftkurve einen parabelförmigen Verlauf. Alle bekannten Verfahren sind gemeinsam dadurch gekennzeichnet, dass der Kurvenverlauf der Siegelkraftkurve bis zu einer Maximalkraft ansteigt, bei dieser Maximalkraft eventuell für eine bestimmte Zeit konstant gehalten wird und anschließend entlang der Siegelkraftkurve bis auf den Nullwert beim Öffnen der Backen zurückgeht. Charakteristisch ist dabei, dass die Siegelkraft bis zum Erreichen der Maximalsiegelkraft permanent ansteigt, wobei dieser Anstieg der Siegelkraft bis zum Erreichen der Maximalkraft einen im Prinzip beliebigen, beispielsweise linearen, kreisabschnittsförmigen oder parabelförmigen Siegelkraftverlauf aufweisen kann. Üblicherweise wird bei dem bekannten Siegelverfahren angestrebt, dass die Maximalkraft möglichst bald erreicht wird, was bedeutet, dass die Siegelkraft nach Schließen der Siegelbacken mit einer möglichst großen Steigung erhöht werden soll.

Beim Foliensiegeln mit Ultraschall besteht das Problem, dass die Schweißnähte sich oftmals nur unvollständig oder mit nicht ausreichender Siegelqualität schließen. Untersuchungen haben nun gezeigt, dass dies insbesondere darauf beruht, dass das Folienmaterial bei der Einbringung der Schweißenergie durch Ultraschall in anderer Weise aufschmilzt, als beim Einbringen der Schweißenergie durch direkte Wärmeeinwirkung. Bei der Einbringung der Schweißenergie durch Ultraschall erwärmt sich das Folienmaterial nämlich anders als bei der direkten Wärmeeinwirkung nicht von außen nach Innen, sondern von Innen nach außen. Das heißt beim Ultraschallschweißen schmelzen zuerst die inneren Schichten des Materials auf, wohingegen äußere Schichten länger zum Aufschmelzen brauchen. Die bekannten Strategien zur Quersiegelung durch direkte Wärmeeinwirkung können deshalb nur eingeschränkt auf die Quersiegelung durch Ultraschallschweißen übertragen werden. Großen Einfluss auf das Ergebnis der Foliensiegelung beim Quersiegeln hat der während des Quersiegeln aufgebrachte Siegeldruck. Untersuchungen haben nun gezeigt, dass die bekannten Verfahren zur Siegeldruckregelung beim Quersiegeln durch direkte Wärmeeinwirkung nicht unmittelbar auf Verfahren zur Siegeldruckregelung beim Quersiegeln durch Ultraschallschweißen übertragen werden können.

Demgegenüber sind aus den Schriften US 2007/0257087 A1 sowie aus der US 2009/0188966 A1 Schweißvorrichtungen zum Schweißen von Kunststoffbauteilen bekannt, bei denen zur Steuerung des Schweißprozesses neben einem Wegsensor weiterhin ein Drucksensor zur Messung des aktuellen von der Schweißbacke ausgeübten Schweißdrucks eingesetzt wird. Hierdurch wird ein Verfahren zum Schweißen ermöglicht, bei dem der Schweißvorgang anhand eines vorgegebenen Schweißdruckverlaufs durchgeführt wird. Hierzu wird in der zweiten Schrift weiterhin angegeben, dass der Weg der Schweißbacke derart gesteuert werden kann, dass zunächst kurzzeitig ein hoher Schweißdruck aufgebaut wird, welcher nach einem Abfall auf ein niedrigeres Niveau für eine gewisse Zeit gehalten wird, wobei vor Abschluss des Schweißvorgangs der Schweißdruck wiederum kurzzeitig geringfügig gesteigert wird.

Ausgehend von diesem Stand der Technik ist es deshalb Aufgabe der vorliegenden Erfindung ein neues Siegelverfahren zur Erzeugung einer Schweißkraft bzw. eines Schweißdruckes für eine Schweißbacke, insbesondere eine Schweißbacke einer Quersiegelstation in einer vertikalen Schlauchbeutelmaschine, vorzuschlagen, das beim Quersiegeln durch Ultraschallschweißen eingesetzt werden kann, um die Qualität der Foliensiegelung zu steigern und hierbei eine Leistungsoptimierung der eingesetzten Antriebe vorzunehmen.

Diese Aufgabe wird durch ein Verfahren nach der Lehre des Anspruchs 1 gelöst.

Bevorzugte Ausführungsformen der Erfindung sind Gegenstand der Unteransprüche.

Das erfindungsgemäße Siegelverfahren beruht auf dem Grundgedanken, dass die auf den Folienschlauch wirkende Siegelkraftkurve ein erstes relatives Siegelkraftmaximum und ein zweites relatives Siegelkraftmaximum aufweist, wobei die Siegelkraft des ersten Siegelkraftmaximums höher ist als die Siegelkraft beim zweiten Siegelkraftmaximum. Dies bedeutet mit anderen Worten, dass beim Siegeln des Folienschlauchs und des damit verbundenen Durchlaufen der Siegelkraftkurve die Siegelkraft zunächst bis zum ersten Siegelkraftmaximum ansteigt. Nach Durchlaufen des ersten Siegelkraftmaximums wird die Siegelkraft abgesenkt und durchläuft im weiteren Verlauf die Siegelkraft eines zweiten relativen Siegelkraftmaximums. Die Siegelkraft des zweiten Siegelkraftmaximums ist dabei niedriger als die Siegelkraft des ersten Siegelkraftmaximums. Dabei ist es selbstverständlich auch denkbar, dass noch weitere relative Siegelkraftmaxima durchlaufen werden. Ganz grundsätzlich ist im Hinblick auf die Erfindung darauf hinzuweisen, dass die Größen Siegelkraft, Siegeldruck und Motorantriebsleistung der Siegelbacken als korrelierende Parameter anzusehen sind.

Durch das Vorschalten des höheren ersten Siegelkraftmaximums vor das niedriger zweite Siegelkraftmaximum wird erreicht, dass die Siegelkraft zu Beginn des Siegelprozesses, das heißt in einem Zeitraum, während dessen das Folienmaterial sich zunächst nur in den Kernschichten erwärmt auf das höchste Niveau ansteigt. Dieses Siegelkraftniveau reicht dann aus, um die Ultraschallwellen aus den Schweißbacken in das Material des Folienschlauchs einzukoppeln. Wenn der Folienschlauch auf ein ausreichendes Maß erwärmt ist, kann die Siegelkraft dann bis zum zweiten Siegelkraftmaximum abgesenkt und dort gehalten werden. Durch die Reduktion der Siegelkraft im zweiten Teil des Siegelprozesses bis zum Anfang des zweiten Siegelkraftmaximums kann ein erheblicher Anteil der Antriebsenergie zur Aufbringung der Siegelkraft eingespart werden. Außerdem kann der Antrieb zum Antrieb der Siegelbacken, der zur Aufbringung der Siegelkraft notwendig ist, entsprechend schwächer dimensioniert werden, woraus sich eine leichtere Bauweise und eine höhere Antriebsdynamik ergibt.

Die Untersuchungen hinsichtlich der Qualität der Siegelnähte hat weiter ergeben, dass die Siegelqualität der Schweißnaht im Wesentlichen von der Einhaltung der Siegelkraft während des ersten Siegelkraftmaximums abhängt, wohingegen die Einwirkzeit der Siegelkraft des ersten Siegelkraftmaximums nur einen sehr geringen Einfluss hat. Dies bedeutet mit anderen Worten, dass auch bei nur sehr kurzzeitiger Aufbringung der Siegelkraft des ersten Siegelkraftmaximums eine sehr gute Siegelqualität erreichbar ist. Erfindungsgemäß ist deshalb vorgesehen, dass die Siegelkraft des ersten Siegelkraftmaximums von einer kurzzeitigen Kraftspitze gebildet wird. Diese kurzzeitige Kraftspitze und der damit kurzzeitige Druckimpuls reichen aus, um eine Siegelnaht mit ausreichender Siegelqualität zu erzeugen.

Zur Realisierung einer besonders leichten Bauweise ist weiterhin vorgesehen, dass diese kurzzeitige Kraftspitze durch kurzeitigen Überlastbetrieb des Antriebs der Schweißbacken erzeugt wird. Die Leistung des Antriebs im Überlastbetrieb wird dabei oberhalb der Maximalleistung des Antriebs im Dauerlastbetrieb liegen. Im Ergebnis ist es dadurch ermöglicht, den Antrieb der Schweißbacken auf ein geringeres Belastungsniveau auszulegen, da die kurzzeitige Kraftspitze zum Versiegeln der Siegelnaht durch einen kurzzeitigen Überlastbetrieb erzielt werden kann. Konventionelle Antriebsmotoren und die zugehörige Leistungselektronik sind in der Regel hinsichtlich einer kurzzeitigen Überlast tolerant, so dass die Antriebseinheit entsprechend mit einem geringeren Belastungsniveau ausgelegt werden kann und dadurch auch leichter und kostengünstiger wird.

Besonders vorteilhaft ist das erfindungsgemäße Verfahren, wenn der Folienschlauch mit mehr als zwei Folienlagen, beispielsweise in vier Folienlagen, zwischen den Schweißbacke zusammengedrückt wird, wobei die paarweise angeordneten Folienlagen mittels über die Siegelfläche in den Folienschlauch eingebrachten Ultraschallschwingungen paarweise verschweißt werden sollen. Denn mit den bisher bekannten Quersiegelverfahren lassen sich solche Folienschläuche mit mehr als zwei Folienlagen nicht durch Ultraschall verschweißen. Versuche haben gezeigt, dass mit dem erfindungsgemäßen Verfahren die Ultraschall-Quersiegelung mit mehr als zwei Folienschichten problemlos möglich ist.

In welchem Verhältnis die Siegelkraft des ersten Siegelkraftmaximums zur Siegelkraft des zweiten Siegelkraftmaximums steht, ist grundsätzlich beliebig, solange die Siegelkraft des ersten Siegelkraftmaximums jedenfalls höher als die Siegelkraft des zweiten Siegelkraftmaximums ist. Als besonders vorteilhaft hat sich erwiesen, wenn die Siegelkraft des zweiten Siegelkraftmaximums im Bereich von 30 bis 70 % der Siegelkraft des ersten Siegelkraftmaximums liegt. Insbesondere vorteilhaft ist es, wenn die Siegelkraft des zweiten Siegelkraftmaximums ungefähr die Hälfte der Siegelkraft des ersten Siegelkraftmaximums beträgt und somit im Bereich von 45 % bis 55 % liegt.

Um die Siegelkraft des ersten Siegelkraftmaximums in möglichst kurzer Zeit erreichen zu können, sollte die Steigung der Flanke an der Siegelkraftkurve unmittelbar vor Erreichen des ersten Siegelkraftmaximums der maximalen Leistung des Antriebs im Überlastbetrieb entsprechen.

In welcher Weise die Siegelkraftkurve zwischen dem ersten Siegelkraftmaximum und dem zweiten Siegelkraftmaximum verläuft, ist grundsätzlich beliebig. Gemäß einer bevorzugten Verfahrensvariante wird die Siegelkraft nach Durchlaufen des ersten Siegelkraftmaximums auf den Wert der Siegelkraft (F_{S2}) des zweiten Siegelkraftmaximums (34) abgesenkt und für eine Haltezeit (t_{H}) im Wesentlichen konstant bei der der Siegelkraft (F_{S2}) des zweiten Siegelkraftmaximums (34) gehalten.

Die Haltezeit während der die Siegelkraft auf dem Niveau des zweiten Siegelkraftmaximums konstant gehalten wird, sollte bevorzugt erst dann enden, wenn das Material des Folienschlauchs zumindest teilweise aufgeschmolzen und verschweißt ist. Zu diesem Zeitpunkt kann dann der Siegelkraftprozess durch Absenkung der Siegelkraft bis hin auf den Nullwert beendet werden.

Das erfindungsgemäße Verfahren ist durch die Siegelkraft des ersten Siegelkraftmaximums und die darunterliegende Siegelkraft des zweiten Siegelkraftmaximums charakterisiert. Um diese beiden Parameter variabel auf verschiedene Randbedingungen, insbesondere auf verschiedene Folienmaterialien anpassen zu können, sollten die Siegelkraft des ersten Siegelkraftmaximums und/oder die Siegelkraft des zweiten Siegelkraftmaximums in der Antriebssteuerung variabel einstellbar sein. Dadurch kann der Siegelkraftkurvenverlauf variabel auf die verschiedenen Randbedingungen, insbesondere auf die unterschiedlichen Folienmaterialien angepasst werden.

Weiterhin ist es besonders vorteilhaft, wenn die Verfahrenszeit bis zum Erreichen des ersten Siegelkraftmaximums und/oder die Verfahrenszeit bis zum Erreichen des zweiten Siegelkraftmaximums und/oder die Haltezeit in der Antriebssteuerung variabel einstellbar sind, um den Siegelkraftverlauf optimal an die Verfahrensrandbedingungen anpassen zu können.

Der Verlauf der Siegelkraftkurve nach Durchlaufen des zweiten Siegelkraftmaximums ist grundsätzlich beliebig. Beispielsweise ist es denkbar, dass danach weitere relative Siegelkraftmaxima durchlaufen werden. Nach einer ersten bevorzugten Verfahrensvariante ist es vorgesehen, dass die Siegelkraft nach Durchlaufen des zweiten Siegelkraftmaximums durch Öffnen der Schweißbacken auf Null gebracht wird. Das bedeutet mit anderen Worten, dass die Siegelkraft nach Durchlaufen des zweiten Siegelkraftmaximums in kurzer Zeit auf Null abfällt.

Alternativ zu dieser ersten Verfahrensvariante ist es auch denkbar, dass die Siegelkraft nach Durchlaufen des zweiten Siegelkraftmaximums auf einen weiteren Zwischenwert abgesenkt und dann konstant gehalten wird. Alternativ dazu ist aber auch ein Anstieg oder Absenken der Kraft denkbar Am Ende dieser Konstantkraftphase, bei der die Siegelkraft auf dem Zwischenwert gehalten wird, wird die Siegelkraft dann wieder durch Öffnen der Schweißbacken auf Null gebracht.

Das vorgeschlagene Verfahren eignet sich insbesondere für getaktet oder kontinuierlich arbeitende vertikale oder horizontale Schlauchbeutelmaschinen. Bei einer derartigen Verpackungsmaschine können die beiden Schweißbacken einer Quersiegelstation entlang einer linienförmigen Bahn bewegt werden. Dabei ist es bevorzugt, dass die Schweißbacken entlang der geschlossenen Bahn bewegt werden, die einen geraden Abschnitt aufweist, wobei entlang dieses geraden Abschnittes bei bewegtem Folienschlauch die mit ihm bewegten Schweißbacken den Folienschlauch verschweißen.

Im Folgenden werden das vorgeschlagene Verfahren und eine nach dem vorgeschlagenen Verfahren betreibbare vertikale Schlauchbeutelmaschine an Hand von einem Ausführungsbeispiel darstellender Figuren näher beschrieben.

Es zeigen:
- **Fig. 1:**: in einer Seitenansicht eine vertikale Schlauchbeutelmaschine mit gegeneinander bewegbaren Schweißbacken einer Quersiegelstation;
- **Fig. 2:**: in einer Seitenansicht zwei senkrecht zueinander wirkende Antriebe zum Bewegen eines Bewegungspunktes A der einen Schweißbacke der **Fig. 1** entlang einer umlaufenden Bahn;
- **Fig. 3:**: in einer schematischen Darstellung den Umlauf zweier gegeneinander bewegbarer, entlang eines effektiven Siegelweges den Folienschlauch der **Fig. 1** verschweißenden Schweißbacken, welche in einem Aufprallpunkt P gegeneinander stoßen;
- **Fig. 4:**: in einer schematischen Darstellung den Schweißbackenumlauf entsprechend **Fig. 3**, jedoch mit einem um eine Vorwärmstrecke und eine Kühlstrecke reduzierten effektiven Siegelweg, und einem anderen Aufprallpunkt P;
- **Fig. 5:**: in einem Diagramm den bekannten, mit herkömmlicher Technik erzielten funktionellen Zusammenhang zwischen der Zeit und dem Siegeldruck für Schweißbacken einer Quersiegelstation einer vertikalen Schlauchbeutelmaschine;
- **Fig. 6:**: in einem Diagramm ein erfindungsgemäßes Siegelkraftprofil;
- **Fig. 7:**: in einer schematischen Darstellung die Ultraschallsiegelung eines teilweise vierlagig liegenden Folienschlauchs zwischen den Schweißbacken der Quersiegelstation gemäß **Fig. 1**.

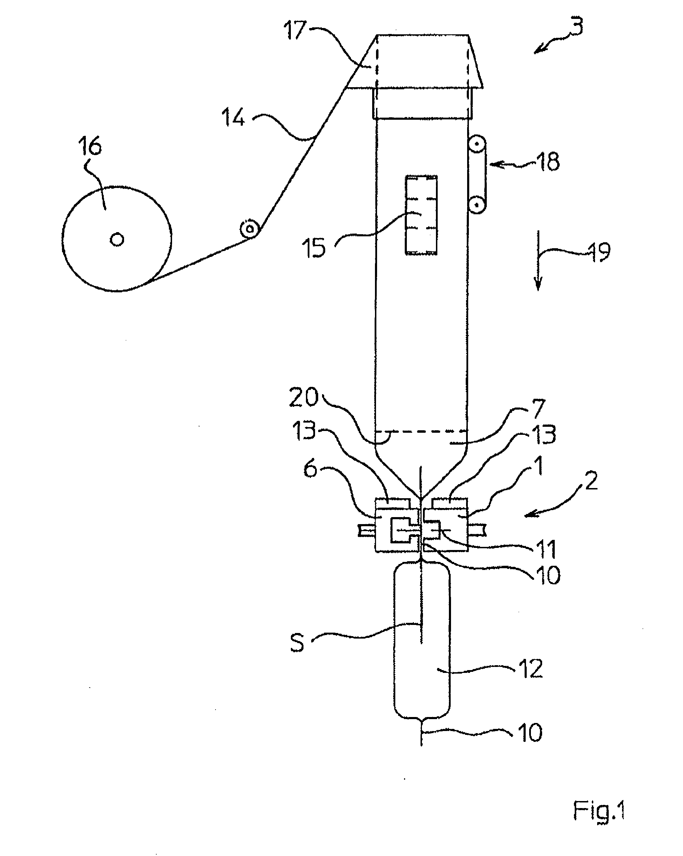

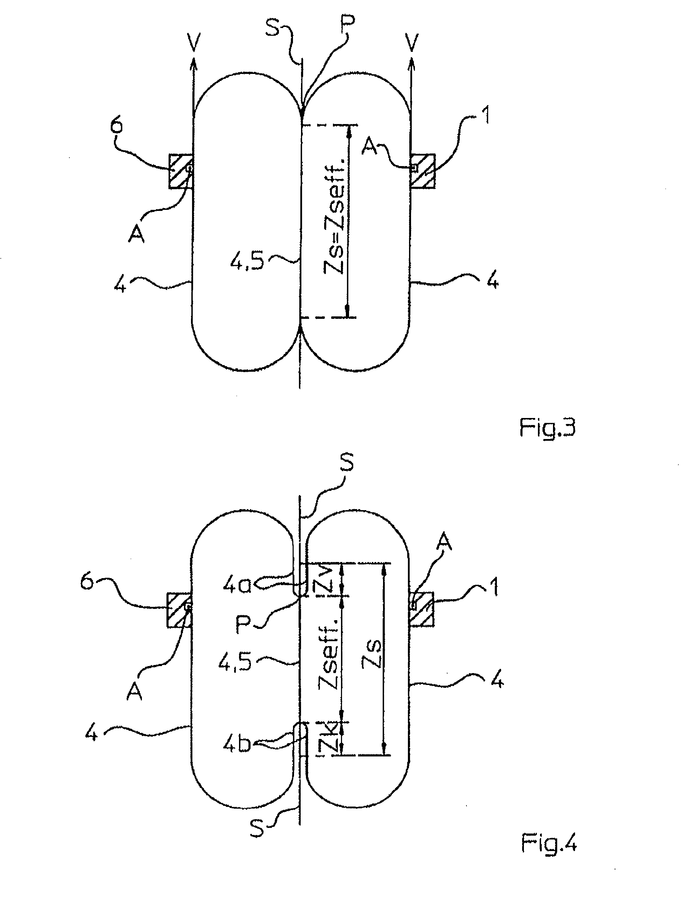

Bei einer vertikalen Schlauchbeutelmaschine 3 wird eine Folienbahn 14 mittels eines Abzuges 15 von einer Vorratsrolle 16 abgezogen, über eine Formschulter 17 gezogen und dabei zu einem Folienschlauch 7 geformt (**Fig. 1**). Der Folienschlauch 7 wird mittels einer Längssiegeleinrichtung 18 in Transportrichtung 19 verschweißt und durch ein Füllrohr 20 befüllt. Zwei gegeneinander bewegbare, umlaufende Schweißbacken 1, 6 in einer Quersiegelstation 2 dienen dazu den Folienschlauch 7 quer zur Transportrichtung 19 mittels Quernähten 10 zu verschweißen. Eine Trenneinrichtung 11 in einer Schweißbacke 1 dient dazu, jeweils einen Schlauchbeutel 12 mit einer bestimmten Beutellänge vom Folienschlauch 7 abzutrennen. Die Schweißbacken 1, 6 werden derart betrieben, dass sie gegenläufig umlaufen, um längs eines effektiven Siegelweges Zseff die Verschweißung des mit gleicher Geschwindigkeit wie die Schweißbacken 1, 6 nach unten bewegten Folienschlauch 7 auszuführen (**Fig. 3**). Beide Schweißbacken 1, 6 werden dazu entlang einer jeweils geschlossenen Bahn 4 bewegt. Jede Bahn 4 weist einen geraden Abschnitt 5 auf, welcher zum Anliegen an dem zwischen den Schweißbacken 1, 6 zusammengedrückten Folienschlauch 7 vorgesehen ist. Dabei werden der Folienschlauch 7 und die Schweißbacken 1, 6 in Richtung des geraden Abschnittes 5 mit frei programmierbarer Geschwindigkeit weiterbewegt, um den Folienschlauch 7 durch die Ultraschalleinwirkung der Schweißbacken 1, 6 innerhalb einer Siegelzeit ts zu verschweißen. Durch die an den Siegelflächen 30 der Schweißbacken 1, 6 eingebrachten Ultraschallschwingungen wird die Folienbahn 14 des Folienschlauchs 7 teilweise aufgeschmolzen, so dass die paarweise einander gegenüberliegenden Schmelzbereiche

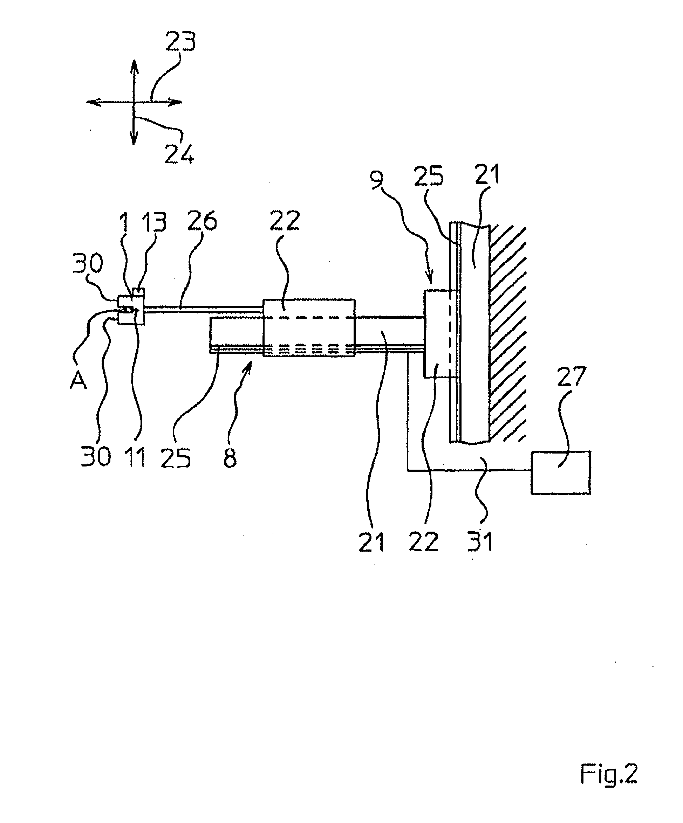

Es könnte aber auch ein Siegelweg Zs vorgegeben werden, welcher sich aus einer Vorwärmstrecke Zv für ein Vorwärmen des Gegenstandes mit vom Gegenstand beabstandeter Schweißbacke 1 , dem eigentlichen, effektiven Siegelweg Zseff und einer Kühlstrecke Zₖ zum Abkühlen des Gegenstandes bei vom Gegenstand beabstandeter Schweißbacke 1, währenddessen Kühlluft von einem an der Schweißbacke 1 vorgesehenen Kühlluftauslass 13 auf den Gegenstand geblasen wird, zusammensetzt (**Fig**. **4**). Damit diese Umstellung der Siegelwege Zs mit allen Orts- und Zeitparametern in einfacher Weise möglich ist, wurde für die Vorwärmstrecke Zv, den effektiven Siegelweg Zseff und die Kühlstrecke Zk jeweils ein bezüglich seiner Länge und seinen Ortskoordinaten frei wählbarer, parallel zum geraden Abschnitt 5 verlaufender Abschnitt 4a, 5, 4b vorgesehen, auf dem sich der Bewegungspunkt A entlang bewegt. Dazu werden die Antriebe 8, 9 (**Fig. 2**) derart betrieben, dass entlang der Bewegungsbahn beide Antriebe 8, 9 gleichzeitig betrieben und einander überlagert werden. Die geraden Abschnitte 4a, 5, 4b, sowie ihre genauen Längen und Ortskoordinaten können frei programmiert werden. An genau vorgegebenen Orten können also genau vorgegebene Geschwindigkeiten und, aus Gründen eines ruhigen Backenumlaufes, auch genau vorgegebene Beschleunigungen für die Schweißbacken 1, 6 vorgegeben werden. Auch die Rücksetzzeit zum erneuten Ansetzen der Schweißbacken 1, 6 an den Folienschlauch 7 und die Zykluszeit (Zeit für einen Backenumlauf) können frei ausgewählt werden. Eine entsprechende Software bringt die vorgewählten Parameter in die gewünschte Abhängigkeit und informiert über nicht zusammenpassende Eingaben.

Damit der Bewegungspunkt A ortsgenau bewegt werden kann, sind zum Bewegen der Schweißbacken 1, 6 jeweils zwei als Elektroantrieb augestaltete, senkrecht zueinander wirkende Antriebe 8, 9 vorgesehen. Dabei kann es sich beispielsweise um zwei elektromagnetischer Linearantriebe handeln. Statt solcher Linearantriebe sind aber auch beliebige andere Antriebskonfigurationen, insbesondere mit Getriebemotoren, denkbar. Diese Antriebe 8, 9 sind mit einer Steuereinrichtung 27 (über eine Leitung 31) verbunden. Zur Vermeidung irgendeiner Ortsungenauigkeit sind zum einen beide Antriebe 8, 9 mit einem Getriebe oder getriebelos miteinander und mit einer Schweißbacke 1, 6 verbunden. Zum anderen sind ortsverändernde Elastizitäten dadurch vermieden, dass jede Schweißbacke 1, 6 über eine starre Verbindung 26 mit dem beweglichen Teil 22 des horizontal wirkenden Antriebs 8 verbunden ist, und dass das antreibende Teil 21 dieses Antriebs 8 mit dem in vertikaler Richtung beweglichen Teil 22 des anderen Antriebs 9 starr verbunden ist. Die frei wählbaren Ortskoordinaten erlauben in jedem Punkt der Bahn 4 eine ideale Backenbewegung, auch bei relativ kompliziertem Bahnverlauf.

Ein Aufeinanderprallen der Siegelflächen 30 der Schweißbacken 1, 6 geschieht jeweils in einem Aufprallpunkt P (**Fig. 3, Fig. 4**), ab dem ein effektiver Siegelweg Zseff beginnt. Dieser Aufprallpunkt P liegt in einer Siegelebene S. Um ein sanftes Aufeinanderstoßen der Siegelflächen 30 und damit den Aufbau einer Siegelkraft (Fs) zu erreichen, wird die Normalkomponente V_{N} eines jeweils in einer Siegelflächenebene mittig oder außermittig liegenden Bewegungspunktes A durch entsprechendes Ansteuern der beiden Antriebe 8, welche jeweils eine Schweißbacke 1, 6 in Normalrichtung bewegen, von der Steuereinrichtung 27, die über jeweils eine Leitung 31 (**Fig. 2**) mit jeweils einem antreibenden Teil 21 eines Antriebs 8 verbunden ist, gesteuert.

Die Siegelkraft Fs wird von einer Steuereinrichtung 27 einer Kraftsteuerung des Antriebs 8 während der Siegelzeit ts vorgegeben. Dabei wird im Falle eines getakteten Folientransportes jede Schweißbacke 1, 6 entlang einer linienförmigen Bahn bewegt, und bei Folienstillstand und am Folienschlauch 7 anliegenden Schweißbacken 1, 6 während der Siegelzeit ts eine zeitabhängige Siegelkraft Fs von der Steuereinrichtung 27 vorgegeben. Alternativ dazu wird bei kontinuierlichem Folientransport jede Schweißbacke 1, 6 entlang einer geschlossenen Bahn 4 bewegt, welche einen geraden Abschnitt 5 aufweist, entlang dessen bei bewegtem Folienschlauch 7 die mit ihm mitbewegte Schweißbacke 1, 6 den Folienschlauch 7 verschweißt, wobei die Siegelkraft Fs während der Siegeldauer zeitabhängig von der Steuereinrichtung 27 vorgegeben wird. Innerhalb der Siegeldauer wird dabei ein Siegelkraftprofil erreicht, da der die Normalkomponente und die Siegelkraft Fs erzeugende Antrieb 8 mit der Steuereinrichtung 27 verbunden ist, welche einen zeitlichen Verlauf für die Leistungsaufnahme des Antriebs 8 und damit die Siegelkraft 27 vorgibt. Dabei spielt es keine Rolle, ob die Leistungsaufnahme an sich oder eine mit ihr korrelierte Größe gesteuert und sodann zeitabhängig bis zum Erreichen der Siegelzeit ts geregelt wird.

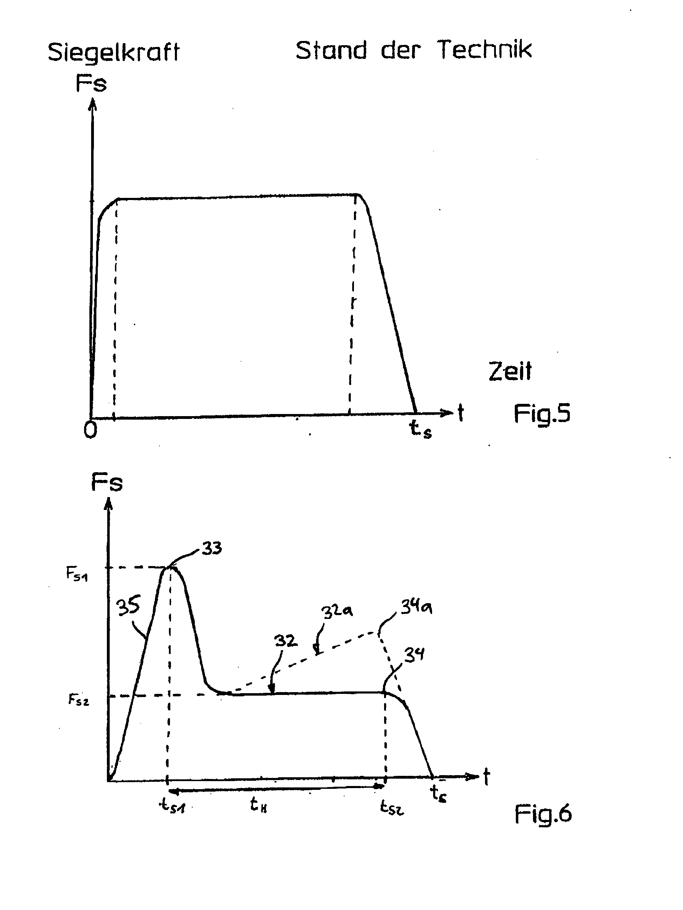

Beim bekannten Stand der Technik (Fig. 5) hat die Siegelkraftkurve einen nahezu rechteckförmigen Verlauf. Die Siegelkraft steigt steil bis zu ihrem Maximalwert an und wird dort für bestimmte Siegelzeit konstant gehalten. Am Ende der Siegelzeit werden die Backen dann wieder geöffnet und die Siegelkraft fällt auf den Wert Null. Durch diesen aus dem Stand der Technik bekannten Siegelkraftverlauf wird ein hohes Maß an Energie verschwendet, da die hohe Siegelkraft zu Beginn des Siegelprozesses für die Erzielung einer guten Siegelqualität nicht erforderlich ist. Denn für das Einkoppeln der notwendigen Wärme in das Material des Folienschlauches reicht eine weit geringere Presskraft aus.

**Fig. 6** zeigt den Verlauf der Siegelkraftkurve bei einer beispielhaften Ausführungsform des erfindungsgemäßen Verfahrens. Demgemäß steigt erfindungsgemäß die Siegelkraftkurve zunächst bis zur Siegelkraft Fs1 bei einem ersten relativen Siegelkraftmaximum 33. Sobald dieses erste Siegelkraftmaximum 33, das von einer kurzzeitigen Kraftspitze gebildet wird, durchlaufen ist, wird die Siegelkraft 32 auf den Wert der Siegelkraft F_{S2} des zweiten Siegelkraftmaximums 34 abgesenkt und dort für eine Haltezeit t_{H} im Wesentlichen konstant gehalten. Alternativ dazu kann die Siegelkraft 32a bzw. 32b nach der Absenkung auch wieder bis zum Erreichen des zweiten Siegelkraftmaximums 34a linear angehoben werden. Auch andere Siegelkraftverläufe sind im Grundsatz durch entsprechende Programmierung des Siegelkraftverlaufs denkbar.

Am Ende der Haltezeit t_{H} wird die Siegelkraft 32 dann durch Öffnen der Schweißbacken 1 und 6 auf den Nullwert abgesenkt. Die Dauer der Haltezeit t_{H} ist dabei so abgestimmt, dass die zu verschweißende Folie bei Erreichen des Endes der Haltezeit t_{H} zumindest teilweise aufgeschmolzen und verschweißt ist. Das Siegelkraftmaximum 33 bildet eine kurzzeitige Kraftspitze, die sich in einem kurzzeitigen Maximaldruckimpuls auf die Folie überträgt. Zur Erzeugung dieser kurzzeitigen Kraftspitze des Siegelkraftverlaufes beim ersten Siegelkraftmaximum wird der Antrieb 8 bzw. der Antrieb 9 der beiden Schweißbacken kurzzeitig im Überlastbetrieb betrieben, so dass die Antriebe 8 und 9 in ihrem Normalbetrieb entsprechend schwächer dimensioniert werden können. Nach Durchlaufen des zweiten Siegelkraftmaximums 34 werden die Schweißbacken 1 und 6 auseinander gefahren und die Siegelkraft 32 fällt dadurch auf den Wert Null. Um die Siegelkraft 32 möglichst schnell auf das erste Siegelkraftmaximum 33 steigern zu können, entspricht die Steigung der Flanke 35 an der Siegelkraftkurve 32 unmittelbar vor Erreichen des zweiten Siegelkraftmaximums der maximalen Leistung des Antriebs 8 bzw. 9 im Überlastbetrieb.

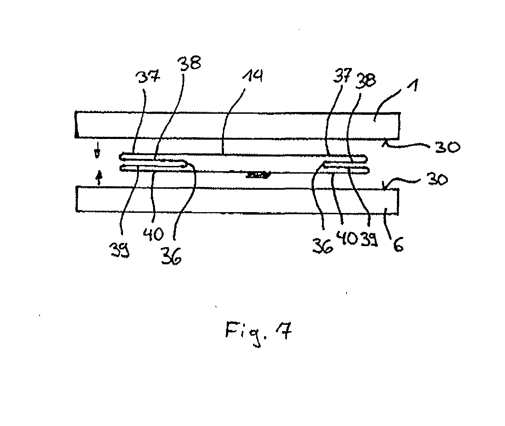

**Fig. 7** zeigt in einer schematischen Darstellung die Ultraschallsiegelung eines teilweise vierlagig liegenden Folienschlauchs 7 zwischen den Schweißbacken 1 und 6 der Quersiegelstation 2 gemäß **Fig. 1**. Die äußeren Kanten 36 des Folienschlauchs 7 sind im Bereich der Quersiegelnähte eingefaltet, so dass die Folienbahn 14 in den eingefalteten Bereichen in vier Folienlagen 37, 38, 39 und 40 liegt. Die Folienlagen 37 und 38 bzw. die Folienlagen 39 und 40 werden durch die mit den Schweißbacken 1 und 6 an den Siegelflächen 30 eingebrachte Ultraschallschwingungen paarweise miteinander verschweißt. Durch die Anwendung des erfindungsgemäßen Verfahrens gelingt eine zuverlässige Ultraschallsiegelung auch in den Bereichen, in denen die Folienbahn 14 vierlagig übereinander liegt.

## Patentansprüche

1. Verfahren zum Erzeugen einer Schweißkraft bzw. eines Schweißdruckes für eine Schweißbacke (1, 6) wobei die Schweißbacke (1, 6) entlang einer geschlossenen Bahn (4) umlaufend oder entlang einer linienförmigen Bahn (29) hin- und herbewegt wird, um gegen einen Widerstand zu stoßen, wobei ein Folienschlauch (7) zwischen dem Widerstand und zumindest einer Siegelfläche (30) der Schweißbacke (1, 6) zusammengedrückt wird, um den Folienschlauch (7) mittels über die Siegelfläche (30) in den Folienschlauch (7) eingebrachten Ultraschallschwingungen bei einem ausgeübten Druck in einer Siegelebene (S) unter einer Siegelkraft (Fs) innerhalb einer Siegelzeit (ts) zu verschweißen, und wobei zumindest ein Antrieb (8, 9) dazu vorgesehen ist, die Schweißbacke (1, 6) in einer Normalrichtung zu einer Oberfläche des Widerstandes hin zu bewegen, um derart den Schweißvorgang ortsfest oder entlang eines effektiven Siegelweges (Zseff) innerhalb der Siegelzeit (ts) durchzuführen, und wobei die Siegelkraft (Fs) oder ein mit der Siegelkraft (Fs) korrelierender Siegelparameter von einer Steuereinrichtung (27) während der Siegelzeit (ts) derart vorgegeben wird, dass die Siegelkraft (Fs) innerhalb der Siegelzeit (ts) entlang einer Siegelkraftkurve (32) verläuft, **dadurch gekennzeichnet,**
**dass** die Siegelkraftkurve (32) ein erstes relatives Siegelkraftmaximum (33) mit einer Siegelkraft (F_{S1}) und zumindest ein zweites relatives Siegelkraftmaximum (34) mit einer Siegelkraft (F_{S2}) aufweist, wobei die Siegelkraft (F_{S1}) beim ersten Siegelkraftmaximum (33) höher ist als die Siegelkraft (F_{S2}) beim zweiten Siegelkraftmaximum (34), wobei die Siegelkraft (F_{S1}) des ersten Siegelkraftmaximums (33) von einer kurzzeitigen Kraftspitze durch kurzzeitigen Überlastbetrieb des Antriebs (8, 9) der Schweißbacke (1, 6) erzeugt wird.

2. Verfahren nach Anspruch 1,
**dadurch gekennzeichnet,**
**dass** der Folienschlauch mit mehr als zwei paarweise angeordneten Folienlagen (37, 38, 39, 40) zwischen den Schweißbacke (1, 6) zusammengedrückt wird, wobei die paarweise angeordneten Folienlagen (37, 38, 39, 40) mittels über die Siegelfläche (30) in den Folienschlauch (7) eingebrachten Ultraschallschwingungen paarweise verschweißt werden.

3. Verfahren nach Anspruch 1 oder 2,
**dadurch gekennzeichnet,**
**dass** die Siegelkraft (F_{S2}) des zweiten Siegelkraftmaximums (34) im Bereich von 30 bis 70 % der Siegelkraft (F_{S1}) des ersten Siegelkraftmaximums (33) liegt.

4. Verfahren nach einem der Ansprüche 1 bis 3,
**dadurch gekennzeichnet,**
**dass** die Steigung der Flanke (35) an der Siegelkraftkurve (32) unmittelbar vor Erreichen des ersten Siegelkraftmaximums (33) der maximalen Leistung des Antriebs (8, 9) im Überlastbetrieb entspricht.

5. Verfahren nach einem der Ansprüche 1 bis 4,
**dadurch gekennzeichnet,**
**dass** die Siegelkraft (Fs) nach Durchlaufen des ersten Siegelkraftmaximums (33) auf den Wert der Siegelkraft (F_{S2}) des zweiten Siegelkraftmaximums (34) abgesenkt und für eine Haltezeit (t_{H}) im Wesentlichen konstant bei der der Siegelkraft (F_{S2}) des zweiten Siegelkraftmaximums (34) gehalten wird.

6. Verfahren nach Anspruch 5,
**dadurch gekennzeichnet,**
**dass** die Haltezeit (t_{H}) erst endet, wenn die Schmelzschicht des Folienschlauchs (7) zumindest teilweise aufgeschmolzen und verschweißt ist.

7. Verfahren nach einem der Ansprüche 1 bis 6,
**dadurch gekennzeichnet,**
**dass** die Siegelkraft (F_{S1}) des ersten Siegelkraftmaximums (33) und/oder die Siegelkraft (F_{S2}) des zweiten Siegelkraftmaximums (34) in der Antriebssteuerung variabel einstellbar sind.

8. Verfahren nach einem der Ansprüche 1 bis 7,
**dadurch gekennzeichnet,**
**dass** die Zeit (t_{S1}) bis zum Erreichen des ersten Siegelkraftmaximums (33) und/oder die Zeit (t_{S2}) bis zum Erreichen des zweiten Siegelkraftmaximums (34) und/oder die Haltezeit (t_{H}) in der Antriebssteuerung variabel einstellbar ist.

9. Verfahren nach einem der Ansprüche 1 bis 8,
**dadurch gekennzeichnet,**
**dass** die die Siegelkraft (Fs) nach Durchlaufen des zweiten Siegelkraftmaximums (34), durch Öffnen der Schweißbacken (1, 6) auf Null gebracht wird.

10. Verfahren nach einem der Ansprüche 1 bis 9,
**dadurch gekennzeichnet,**
**dass** die die Siegelkraft (Fs) nach Durchlaufen des zweiten Siegelkraftmaximums (34) auf einen Zwischenwert abgesenkt und dann gehalten wird und erst danach durch Öffnen der Schweißbacken (1, 6) auf Null gebracht wird.

11. Verfahren nach einem der Ansprüche 1 bis 10,
**dadurch gekennzeichnet,**
**dass** die Schweißbacken (1, 6) entlang einer geschlossenen Bahn (4) bewegt werden, die einen geraden Abschnitt (5) aufweist, entlang dessen bei bewegtem Folienschlauch (7) die mit ihm mitbewegten Schweißbacken (1, 6) den Folienschlauch (7) verschweißen.

## Claims

1. A method for creating a welding force or welding pressure for a welding jaw (1, 6), wherein the welding jaw (1, 6) is moved back and forth along a closed track (4) in a circumferential fashion or along a linear track (29) in order to abut against a resistance element, wherein a film tube (7) is compressed between the resistance element and at least one of the sealing surfaces (30) of the welding jaw (1, 6), in order to weld the film tube (7) shut by means of ultrasonic vibrations being applied to the film tube (7) via the sealing surface (30), at an exerted pressure in a sealing plane (S) under a sealing force (Fs) within a sealing time (ts), and wherein at least one drive (8, 9) is provided for moving the welding jaw (1, 6) in a normal direction towards one of the surfaces of the resistance element, in order to perform the welding process in this manner in a stationary position or along an effective sealing path (Zseff) within the sealing time (ts), and wherein the sealing force (Fs) or a sealing parameter which correlates with the sealing force (Fs) is predetermined by a control unit (27) during the sealing time (ts), in such a manner that the sealing force (Fs) runs along a sealing force curve (32) within the sealing time (ts),
**characterised in that**
the sealing force curve (32) has a first relative sealing force maximum (33) with a sealing force (F_{S1}), and has at least one second relative sealing force maximum (34) with a sealing force (F_{S2}), wherein the sealing force (F_{S1}), at the first sealing force maximum (33), is higher than the sealing force (F_{S2}) at the second sealing force maximum (34), wherein the sealing force (F_{S1}) of the first sealing force maximum (33) is created by a temporary force peak due to temporary overload operation of the drive (8, 9) of the welding jaw (1, 6).

2. The method according to claim 1,
**characterised in that**
the film tube having more than two film layers (37, 38, 39, 40) being arranged in pairs is compressed between the welding jaws (1, 6), wherein the film layers (37, 38, 39, 40) being arranged in pairs are welded together in pairs by means of ultrasonic vibrations being applied to the film tube (7) via the sealing surface (30).

3. The method according to claim 1 or 2,
**characterised in that**
the sealing force (F_{S2}) of the second sealing force maximum (34) is in the range of 30% to 70% of the sealing force (F_{S1}) of the first sealing force maximum (33).

4. The method according to any one of claims 1 to 3,
**characterised in that**
the slope of the flank (35) on the sealing force curve (32) corresponds to the maximum power of the drive (8, 9) in overload operation immediately before reaching the first sealing force maximum (33).

5. The method according to any one of claims 1 to 4,
**characterised in that**
after having passed through the first sealing force maximum (33), the sealing force (Fs) is reduced to the value of the sealing force (F_{S2}) of the second sealing force maximum (34) and is held essentially constantly at the sealing force (F_{S2}) of the second sealing force maximum (34) for a holding time (t_{H}).

6. The method according to claim 5,
**characterised in that**
the holding time (t_{H}) ends only when the molten layer of the film tube (7) is at least partially fused and welded.

7. The method according to any one of claims 1 to 6,
**characterised in that**
the sealing force (F_{S1}) of the first sealing force maximum (33) and/or the sealing force (F_{S2}) of the second sealing force maximum (34) is/are variably adjustable in the drive control unit.

8. The method according to any one of claims 1 to 7,
**characterised in that**
the time (t_{S1}) until reaching the first sealing force maximum (33) and/or the time (t_{S2}) until reaching the second sealing force maximum (34) and/or the holding time (t_{H}) is/are variably adjustable in the drive control unit.

9. The method according to any one of claims 1 to 8,
**characterised in that**
after having passed through the second sealing force maximum (34), the sealing force (Fs) is brought to zero by opening the welding jaws (1, 6).

10. The method according to any one of claims 1 to 9,
**characterised in that**
after having passed through the second sealing force maximum (34), the sealing force (Fs) is reduced to an interim value and is then held there and is only then brought to zero by opening the welding jaws (1, 6).

11. The method according to any one of claims 1 to 10,
**characterised in that**
the welding jaws (1, 6) are moved along a closed track (4), which has a straight section (5), along which the welding jaws (1, 6), moving together with the film tube (7), weld the film tube (7) shut.

## Revendications

1. Procédé de génération d'une force de soudage ou pression de soudage pour une mâchoire (1, 6) de soudage, dans lequel la mâchoire (1, 6) de soudage est manoeuvrée d'avant en arrière le long d'une voie (4) fermée sur toute la périphérie ou le long d'une voie (29) linéaire afin de buter contre un élément de résistance, dans lequel un film tubulaire (7) est comprimé entre l'élément de résistance et au moins l'une des surfaces (30) de scellement de la mâchoire (1, 6) de soudage afin de souder le film tubulaire (7) au moyen de vibrations ultrasoniques appliquées au film (7) tubulaire en passant par la surface (30) de scellement, à une pression exercée dans un plan (S) de scellement sous une force (Fs) de scellement en un temps (ts) de scellement, et dans lequel au moins un entraînement (8, 9) est prévu pour manoeuvrer la mâchoire (1, 6) de soudage dans une direction normale vers l'une des surfaces de l'élément de résistance, afin d'exécuter le processus de soudage de cette manière dans une position fixe ou le long d'une course (Zseff) de scellement effective en le temps (ts) de scellement, et dans lequel la force (Fs) de scellement ou un paramètre de scellement étant en corrélation avec la force (Fs) de scellement est fixé par une unité (27) de commande pendant le temps (ts) de scellement, de telle manière que la force (Fs) de scellement passe le long d'une courbe (32) de force de scellement en le temps (ts) de scellement,
**caractérisé en ce que**
la courbe (32) de force de scellement présente un premier maximum (33) relatif de force de scellement avec une force (F_{S1}) de scellement, et présente au moins un deuxième maximum (34) relatif de force de scellement avec une force (F_{S2}) de scellement, dans lequel la force (F_{S1}) de scellement, au premier maximum (33) de force de scellement, est supérieure à la force (F_{S2}) de scellement au deuxième maximum (34) de force de scellement, dans lequel la force (F_{S1}) de scellement du premier maximum (33) de force de scellement est générée par un pic de force temporel en vertu d'un fonctionnement en surcharge temporel de l'entraînement (8, 9) de la mâchoire (1, 6) de soudage.

2. Procédé selon la revendication 1,
**caractérisé en ce que**
le film tubulaire présentant plus que deux couches (37, 38, 39, 40) de film, les couches étant disposées par deux, est comprimé entre les mâchoires (1, 6) de soudage, dans lequel les couches (37, 38, 39, 40) de film qui sont disposées par deux sont soudées l'une avec l'autre par deux au moyen de vibrations ultrasoniques appliquées au film (7) tubulaire en passant par la surface (30) de scellement.

3. Procédé selon la revendication 1 ou 2,
**caractérisé en ce que**
la force (F_{S2}) de scellement du deuxième maximum (34) de force de scellement est dans la plage de 30% à 70% de la force (F_{S1}) de scellement du premier maximum (33) de force de scellement.

4. Procédé selon l'une quelconque des revendications 1 à 3,
**caractérisé en ce que**
la pente du flanc (35) sur la courbe (32) de force de scellement correspond à la puissance maximale de l'entraînement (8, 9) en fonctionnement en surcharge immédiatement avant d'atteindre le premier maximum (33) de force de scellement.

5. Procédé selon l'une quelconque des revendications 1 à 4,
**caractérisé en ce qu'**
après avoir passée le premier maximum (33) de force de scellement, la force (Fs) de scellement est réduite à la valeur de la force (F_{S2}) de scellement du deuxième maximum (34) de force de scellement et est maintenue à la force (F_{S2}) de scellement du deuxième maximum (34) de force de scellement pour l'essentiel constamment pour un temps (t_{H}) de maintien.

6. Procédé selon la revendication 5,
**caractérisé en ce que**
le temps (t_{H}) de maintien se termine seulement quand la couche fusible du film (7) tubulaire est fondue et soudée au moins partiellement.

7. Procédé selon l'une quelconque des claims 1 to 6,
**caractérisé en ce que**
la force (F_{S1}) de scellement du premier maximum (33) de force de scellement et/ou la force (F_{S2}) de scellement du deuxième maximum (34) de force de scellement est/sont réglable(s) de façon variable dans l'unité de commande d'entraînement.

8. Procédé selon l'une quelconque des revendications 1 à 7,
**caractérisé en ce que**
le temps (t_{S1}) jusqu'à atteindre le premier maximum (33) de force de scellement et/ou le temps (t_{S2}) jusqu'à atteindre le deuxième maximum (34) de force de scellement et/ou le temps (t_{H}) de maintien est/sont réglable(s) de façon variable dans l'unité de commande d'entraînement.

9. Procédé selon l'une quelconque des revendications 1 à 8,
**caractérisé en ce qu'**
après avoir passée le deuxième maximum (34) de force de scellement, la force (Fs) de scellement est abaissée à zéro en ouvrant les mâchoires (1, 6) de soudage.

10. Procédé selon l'une quelconque des revendications 1 à 9,
**caractérisé en ce qu'**
après avoir passée le deuxième maximum (34) de force de scellement, la force (Fs) de scellement est réduite à une valeur intermédiaire et est y maintenue ensuite, et ce ne qu'ensuite qu'elle est abaissée à zéro en ouvrant les mâchoires (1, 6) de soudage.

11. Procédé selon l'une quelconque des revendications 1 à 10,
**caractérisé en ce que**
les mâchoires (1, 6) de soudage sont manoeuvrées le long d'une voie (4) fermée qui présente une section (5) droite le long de laquelle les mâchoires (1, 6) de soudage soudent le film (7) tubulaire, lesdites mâchoires mouvant avec le film (7) tubulaire.
